Europäisches Patentamt

European Patent Office

Office européen des brevets

(19)

(11) Veröffentlichungsnummer : **0 061 752**
**B1**

(12) **EUROPÄISCHE PATENTSCHRIFT**

(45) Veröffentlichungstag der Patentschrift :
30.01.85

(21) Anmeldenummer : 82102586.3

(22) Anmeldetag : 27.03.82

(51) Int. Cl.⁴ : **F 16 J 15/06**

(54) **Abdichtvorrichtung.**

(30) Priorität : **01.04.81 DE 3113107**

(43) Veröffentlichungstag der Anmeldung :
**06.10.82 Patentblatt 82/40**

(45) Bekanntmachung des Hinweises auf die Patenterteilung : **30.01.85 Patentblatt 85/05**

(84) Benannte Vertragsstaaten :
**AT BE CH DE FR GB IT LI LU NL SE**

(56) Entgegenhaltungen :
**CH-A- 476 237**
**DE-B- 1 290 389**
**DE-C- 809 979**
**GB-A- 977 925**
**US-A- 2 885 227**
**US-A- 3 173 712**

(73) Patentinhaber : **Anton Hummel GmbH Metallwarenfabrik**
**2-4 Mozartstrasse**
**D-7808 Waldkirch (DE)**

(72) Erfinder : **Gehring, Peter**
**Eichhof 11**
**D-7809 Simonswald (DE)**

(74) Vertreter : **Patentanwälte Dipl.-Ing. Hans Schmitt**
**Dipl.-Ing. Wolfgang Maucher**
**Dreikönigstrasse 13**
**D-7800 Freiburg i.Br. (DE)**

EP 0 061 752 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die Erfindung betrifft eine Abdichtvorrichtung mit einem axial beaufschlagten als Profil- oder O-Ring ausgebildeten Dichtring zwischen zwei mittels Gewinden verschraubbaren abzudichtenden Teilen, von denen wenigstens eines zumindest im Dichtbereich einen kreisringförmigen Querschnitt hat, wobei der Dichtring in einem im Gewindebereich angeordneten, ihn teilweise umschließenden Einstich in einem Bund gehalten ist, wobei die Stirnseite des einen Teiles gegen den Dichtring zur Anlage kommt und der den Dichtring umschließende Einstich wenigstens einen ringförmigen Ausweichraum für den durch den Anpreßdruck verformten Dichtring hat, welcher Ausweichraum durch eine Erweiterung des Einstiches in radialer Richtung nach außen gebildet ist und dessen axiale Ausdehnung gleich oder kleiner als etwa 3/4 der sich in gleicher Richtung erstreckenden Abmessung des Dichtringes ist.

Eine derartige Abdichtvorrichtung ist aus DE-U-72 30 680 bekannt. Dabei ist der Querschnitt des Einstiches gerundet und erweitert sich nicht nur in radialer Richtung, sondern auch zur offenen Seite des Einstiches hin.

Wird nun der abzudichtende Teil gegen den zunächst vorstehenden Dichtring angepreßt, verformt dieser sich zunächst in den radial äußeren Bereich des Einstiches, hat dabei aber auch die Tendenz, aus diesem Einstich herauszutreten und ausgequetscht zu werden, wenn der abzudichtende Teil beispielsweise eine scharfe Dichtkante hat. Dieses Austreten des Dichtungswerkstoffes wird dabei durch die gerundete oder schräge Erweiterung des Einstiches zu seiner Öffnung hin begünstigt. Die Abdichtvorrichtung ist nicht geeignet, wahlweise stark angefaste oder nicht angefaste Dichtkanten abzudichten, da eine stark angefaste Dichtkante wegen des relativ wenig vorstehenden Dichtringes zu wenig an diesen angedrückt werden kann, während eine nicht angefaste Kante den Dichtring in der vorerwähnten Weise ausquetschen kann.

Zwar ist aus der US-A-3 173 712 eine Abdichtvorrichtung bekannt, bei welcher der Ausweichraum des den Dichtring umschließenden Einstiches dadurch vergrößert ist, daß der Ausweichraum im Querschnitt trapezförmig ist und sich von der Öffnung des Einstiches weg erweitert. In diesem Falle tritt aber das Problem, sowohl Teile mit rechtwinkligen als auch solche mit angefasten Kanten an den Stirnseiten abzudichten, gar nicht auf, weil diese vorbekannte Abdichtvorrichtung zum Abdichten zweier planer Flächen dient. Der Einstich liegt nämlich radial so weit außen an einem Bund, daß nur die plane Stirnseite des abzudichtenden Teiles daran zur Anlage kommt.

Aus der CH-A-476 237 ist eine Abdichtvorrichtung dargestellt, bei welcher gemäß Fig. 6 ein Rohrstück mit Außengewinde mit seiner Stirnseite gegen einen Bund dadurch angezogen wird, daß eine Überwurfmutter vorgesehen ist. In dem Bund befindet sich ein Einstich mit einem radial nach innen gerichteten Ausweichraum. Dies widerspricht aber der natürlichen Bewegung und dem natürlichen Ausweichen eines Dichtungswerkstoffes, wenn er unter Anpreßdruck gesetzt wird, da er dann eigentlich eine Tendenz zum axialen Ausweichen hat. Es besteht deshalb die Gefahr, daß in diesem Falle Dichtungswerkstoff dann ausgequetscht wird, wenn die Dichtkante des den Dichtring beaufschlagenden Teiles scharfkantig ist. Umgekehrt kann eine stark angefaste Kante nicht abgedichtet werden, da der Dichtring schon ohne Belastung sehr weit und tief in seinem Einstich liegt.

Der Erfindung liegt die Aufgabe zugrunde, eine Abdichtvorrichtung der eingangs erwähnten Art zu schaffen, bei welcher wahlweise mittels O- oder Profilring sowohl Teile mit rechtwinkligen als auch solche mit angefasten Kanten an den Stirnseiten abgedichtet werden können, wobei der Dichtring eine ausreichende Pufferwirkung für diese unterschiedlichen Ausbildung der abzudichtenden Kanten ergeben soll. Ein Ausquetschen der Dichtung beim Abdichten einer rechtwinkligen oder wenig angefasten Kante soll vermieden werden.

Die Lösung dieser Aufgabe besteht darin, daß die den Ausweichraum bildende Erweiterung von wenigstens einer im Querschnitt eine Hinterschneidung bildenden Fläche od. dgl. Zurückweichung begrenzt ist und sich der Ausweichraum von den Dichtring weg vorzugsweise konisch erweitert, so daß der innere als Dichtfläche dienende Bereich des einen Teils eine rechtwinklige oder angefaste Kante besitzen kann.

Bei starkem Druck auf den Dichtring durch eine rechtwinklige Kante des abzudichtenden Teiles kann sich der Dichtring in kontrollierter Weise in den Ausweichraum verformen, wobei die Verformung von der Öffnung des Ausweichraumes weg gerichtet ist. Ein Ausquetschen wird somit vermieden. Dennoch findet auch eine angefaste Kante aufgrund des relativ großen aus dem Ausweichraum vorstenenden Bereiches des Dichtringes eine genügend dichte Anlage an demselben Dichtring.

Die Pufferungsmöglichkeit der Abdichtvorrichtung bezüglich scharfer oder angefaster Kanten kann noch verbessert sein, wenn die axiale Ausdehnung des Ausweichraumes gleich oder kleiner als die Hälfte der in gleicher Richtung sich erstreckenden Abmessung des Dichtringes ist. In einem solchen Falle steht der Dichtring noch weiter aus dem ihn aufnehmenden Einstich vor, so daß eine noch größere Anfasung dennoch zu einer sicheren und dichten Anlage gelangen kann. Dennoch kann aufgrund der radial nach außen gerichteten Erweiterung des Ausweichraumes von seiner Öffnung weg auch eine scharfe Kante angepreßt werden, weil der Dichtring in diese Erweiterung des Ausweichraumes in kontrollierter Weise eingepreßt werden kann.

Für eine gute Fixierung des Dichtringes und Vermeidung eines Ausquetschens insbesondere beim Abdichten einer wenig oder gar nicht angefasten Kante ist es vorteilhaft, wenn die im Querschnitt schräge Begrenzung des Ausweichraumes bei radial von dem Durchmesser des Dichtringes abweichender Form von dem Dichtring zu der von dem Gegenstück abgewendeten Seite des Einstiches ansteigt, so daß der größte Durchmesser des Ausweichraumes an oder nahe bei der Rückwand des Einstiches angeordnet ist. Dadurch wird die Verformung des Dichtringes in gewünschter Weise in eine Position gesteuert, in der der Dichtring sicher und fest gehalten ist. Es ergibt sich praktisch ein im Querschnitt keilförmiger Haltering, hinter den die Dichtung ausweichen kann.

Weitere Ausgestaltungen der Erfindung sind Gegenstand der Ansprüche 4 bis 7.

Nachstehend ist die Erfindung mit ihren ihr als wesentlich zugehörenden Einzelheiten anhand der Zeichnung noch näher beschrieben. Es zeigt :

Figur 1 einen Längsschnitt durch zwei gegeneinander abzudichtende Teile, wobei ein Teil ein Stopfen ist, der das Ende eines Rohres verschließen soll, vor der Montage,

Figur 2 ein Rohrkupplungsstück, welches einen Bund zum Abdichten zweier axial aufschraubbarer und an dem Bund abzudichtender Rohrstücke aufweist, wiederum vor der Montage, sowie in vergrößertem Maßstab und in schematischer Darstellung

Figur 3 bis Figur 6 verschiedene Ausgestaltungsmöglichkeiten des Einstiches zur Aufnahme eines Dichtringes an einem der abzudichtenden Teile beispielsweise gemäß den Figuren 1 und 2.

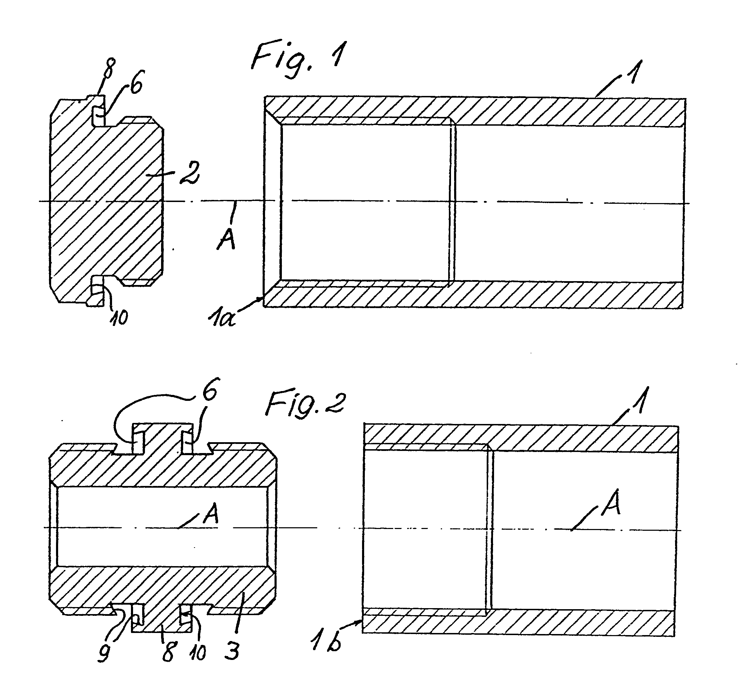

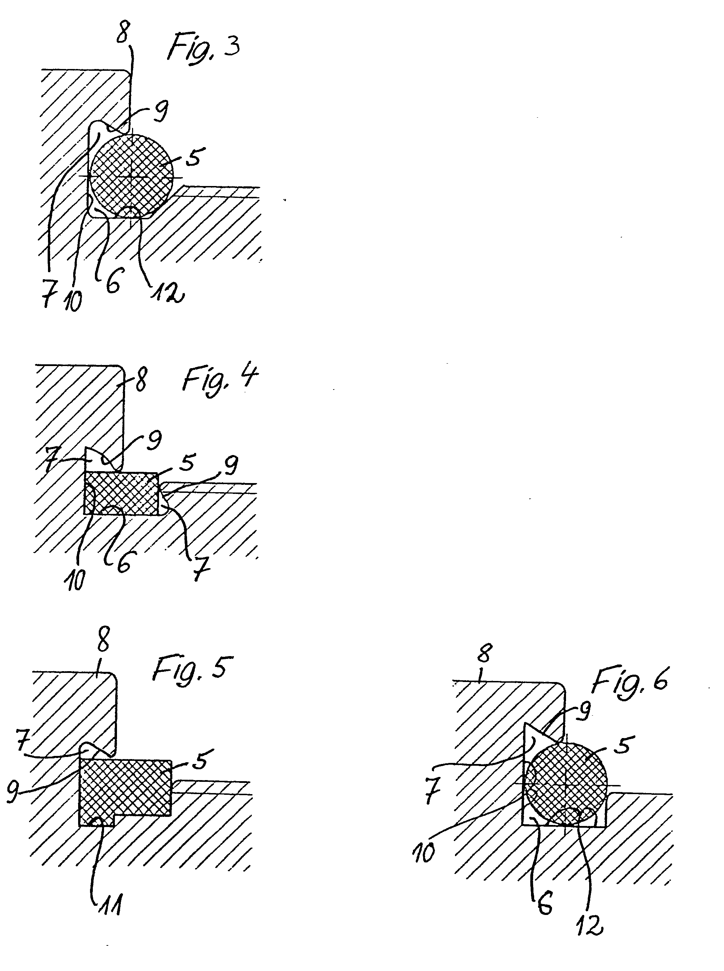

Beim Verschließen eines Rohres 1 mit einem Abschlußstopfen 2 (Fig. 1) oder beim Verbinden eines Rohres 1 mit einer Rohrkupplung 3, die ihrerseits mit einem weiteren Rohr oder einem Verschluß, einem Behälter od. dgl. dicht verbunden werden kann (Fig. 2) sowie bei zahlreichen ähnlichen Verbindungen von zwei abzudichtenden Teilen, von denen wenigstens eines, im Ausführungsbeispiel das Rohr 1, im Dichtbereich einen kreisringförmigen Querschnitt hat, wird wenigstens ein Dichtring 5, z. B. ein O-Ring (Fig. 4 und 6) oder ein im Querschnitt rechteckiger Dichtring (Fig. 4) oder ein im Querschnitt profilierter Ring (Fig. 5) zwischen den beiden Teilen angeordnet und dabei an einem der Teile, im Ausführungsbeispiel entweder an dem Abschlußstopfen 2, der Rohrkupplung 3 oder dem Ventil 4 in einem Einstich 6 od. dgl. Hohlraum gehalten.

Gemäß den Figuren 3 bis 6 kann dabei die Queschnittsform dieses Einstiches 6 unterschiedlich gestaltet sein. In allen Fällen ist jedoch vorgesehen, daß der Einstich 6 wenigstens einen von dem Querschnitt des unverformten, weil noch nicht durch das Gegenstück 1 belasteten, Dichtringes 5 freigelassenen Ausweichraum 7 aufweist, der durch eine Erweiterung des Einstiches 6 in axialer und/oder radialer Richtung gebildet ist. Die den Ausweichraum 7 bildenden Erweiterungen sind dabei ringförmig um die Mittelachse A der abzudichtenden Teile 1 und 2, 1 und 3 oder 1 und 4 usw. angeordnet. Bei starkem Druck auf den Dichtring 5, sei es duch eine starke axiale Verpressung der zu verbindenten Teile aufgrund eines starken Anziehens ihrer Gewinde od. dgl., sei es durch das abzudichtende Medium oder durch beide Einflüsse, kann der aus weichem Werkstoff bestehende Dichtring 5 in die Erweiterung ausweichen, wobei diese Verformung des Dichtringes durch die Formgebung des Ausweichraumes 7 gezielt und gewissermaßen gesteuert ist. Ein unkontrolliertes Ausquetschen eines Dichtringes aus einem beispielsweise lediglich etwa der Kontur des Dichtringes entsprechenden Einstich wird somit vermieden.

Bei den Ausführungsformen nach den Figuren 3, 4, 5 und 6 ist die axiale Ausdehnung oder Tiefe des von einer in radialer Richtung verlaufenden Erweiterung gebildeten Ausweichraumes 7 kleiner als die Hälfte der in gleicher Richtung sich erstreckenden Abmessung des Dichtringes. Bei starkem axialem Druck auf den Dichtring 5 wird dieser teilweise in den Ausweichraum 7 gedrückt, dabei dann von diesem in Form einer Hinterschneidung erfaßt und an einem weiteren Ausweichen oder Abwandern aus dem Einstich 6 gehindert, ohne daß die Gefahr besteht, daß das Rohr 1 in unmittelbare Berührung mit dem Bund 8 od. dgl. des Gegenstückes gelangen kann, wodurch eine sichere Abdichtung gefährdet wäre. Der Dichtring 5 bleibt also trotz seiner Ausweichmöglichkeit als ausreichend dicker Puffer für das Rohr 1 bestehen.

Man erkennt bei allen Ausführungsbeispielen, daß die den oder die Ausweichräume 7 bildenden Erweiterungen von wenigstens einer im Querschnitt schrägen, unter Umständen zusätzlich gewölbten Fläche 9 od. dgl. eine Hinterschneidung bildenden Zurückweichung begrenzt sind. Dadurch wird erreicht, daß sich der Ausweichraum 7 von dem jeweiligen Dichtring 5 weg etwa konisch verjüngt.

Bei den Ausführungsbeispielen nach den Figuren 3, 4, 5 und 6 weicht der ringförmige Ausweichraum 7 von einem der Durchmesser des Dichtringes 5, im Ausführungsbeispiel jeweils vom größten Durchmesser des Dichtringes 5 in radialer Richtung nach außen ab. Dadurch wird einerseits an der Rückwand 10 des Einstiches 6 ein Zurückweichen des Dichtringes gegenüber dem Abdichtdruck vermieden, aber dennoch eine gewisse Ausweichmöglichkeit in radialer Richtung eröffnet. Dadurch können sogar die Dichtflächen vergrößert werden, wobei gleichzeitig eine den Dichtring in dem Einstich 6 festlegende Hinterschneidung ausgenutzt wird. Ein ungewolltes Auspressen und Auswandern der Dichtung unter dem Dichtungsdruck wird also in sinnreicher Weise vermieden.

Die im Querschnitt schräge Begrenzung 9 des Ausweichraumes 7 steigt bei radial von dem Durchmesser des Dichtringes 5 abweichender Form von dem Dichtring 5 zu der von dem Gegenstück, im Ausführungsbeispiel jeweils dem Rohr 1, abgewendeten Seite des Einstiches 6 an, so daß der größte Durchmesser des Ausweichraumes 7 in den erwähnten Ausführungsbeispielen an oder nahe bei der Rückwand 10 des Einstiches angeordnet ist. Dort steht dann also praktisch auch die größte Dichtfläche zur Verfügung.

Die Querschnittsbegrenzung des Einstiches 6 im Bereich seiner Rückwand 10 auf der dem Ausweichraum 7 radial gegenüberliegenden Seite ist im Ausführungsbeispiel gemäß den Figuren 3, 4 und 6 etwa rechtwinklig und dabei gemäß Fig. 3 mit gerundeter Kante ausgebildet. Zusätzlich könnte an dieser Stelle ein weiterer, sich radial und/oder axial erstreckender Einstich 11 vorgesehen sein, der dort zur Aufnahme einer entsprechenden Profilierung des Dichtringes dient. Ist jedoch ein unprofilierter Dichtring vorgesehen, könnte ein solcher Einstich 11 als weiterer Ausweichraum zur Verfügung stehen.

Fig. 4 zeigt eine Anordnung, wobei zusätzlich auch eine axiale Erstreckung des Einstiches 6 mit zusätzlichem radialem Ausweichraum vorgesehen ist.

In Fig. 4 erkennt man noch, daß die schräge Begrenzung 9 des Ausweichraumes 7 gerundet sein kann, wobei sie dort konkav gerundet ist. Auch eine konvexe Rundung wäre möglich. Ferner erkennt man in den Ausführungsbeispielen, daß der Übergang der schrägen Begrenzung 9 des oder der Ausweichräume 7 in die in Ausgangsstellung bereits an dem Dichtring 5 anliegende Begrenzung, z. B. die Rückwand 10, aber auch die untere Begrenzung 12 gerundet oder spitzwinklig und dabei bevorzugt rechtwinklig ausgebildet sein kann.

In Fig. 3 und 6 ist noch angedeutet, daß bei Verwendung von O-Ringen in Verbindung mit den dort gezeigten Einstichen 6 und Ausweichräumen 7 von selbst ein weiterer kleiner Ausweichraum am Übergang zwischen der Rückwand 10 und der unteren Begrenzung 12 entsteht. Bei Kombination der Einstichform gemäß Fig. 3 oder 6 mit einem O-Ring ergibt sich also eine größere Pufferungsmöglichkeit. Sowohl ein Rohr 1 mit angefasten Stirnseiten 1 a gemäß Fig. 1 als auch ein Rohr 1 mit im Querschnitt rechtwinkligen Stirnseiten 1 b (Fig. 2) können mit einer solchen Dichtvorrichtung sicher abgedichtet werden, weil der Abdichtring 5, vor allem ein O-Ring, genügend Ausweichmöglichkeiten und Verformungsmöglichkeiten zum Ausgleich dieser unterschiedlichen Materialmengen im Dichtbereich hat, ohne daß die Gefahr eines Ausquetschens und Auswanderns des Dichtringes besteht. Es ergibt sich also eine Abdichtvorrichtung, die bei großen Innendrücken und einem starken Auseinanderpressen der abzudichtenden Teile kein Ausquetschen der Dichtung aus ihrem Sitz mit der Folge von Undichtigkeiten zuläßt, wobei gleichzeitig das abzudichtende Gegenstück eine scharfe Kante oder eine angefaste Kante haben kann und all diese Formen von der Dichtung ausgeglichen und abgefangen werden

können.

## Ansprüche

1. Abdichtvorrichtung mit einem axial beaufschlagten als Profil- oder O-Ring ausgebildeten Dichtring (5) zwischen zwei mittels Gewinden verschraubbaren abzudichtenden Teilen, von denen wenigstens eines (1) zumindest im Dichtbereich einen kreisringförmigen Querschnitt hat, wobei der Dichtring (5) in einem im Gewindebereich angeordneten, ihn teilweise umschließenden Einstich (6) in einem Bund (8) des anderen Teils (2, 3) gehalten ist, wobei die Stirnseite des einen Teiles (1) gegen den Dichtring (5) zur Anlage kommt und der den Dichtring (5) umschließende Einstich (6) wenigstens einen ringförmigen Ausweichraum (7) für den durch den Anpreßdruck verformten Dichtring (5) hat, welcher Ausweichraum (7) durch eine Erweiterung des Einstiches in radialer Richtung nach außen gebildet ist und dessen axiale Ausdehnung gleich oder kleiner als etwa 3/4 der sich in gleicher Richtung erstreckenden Abmessung des Dichtringes (5) ist, dadurch gekennzeichnet, daß die den Ausweichraum (7) bildende Erweiterung von wenigstens einer im Querschnitt eine Hinterschneidung bildenden Fläche (9) od. dgl. Zurückweichung begrenzt ist und sich der Ausweichraum (7) von dem Dichtring (5) weg vorzugsweise konisch erweitert, so daß der innere als Dichtfläche dienende Bereich des einen Teils (1) eine rechtwinklige oder eine angefaste Kante besitzen kann.

2. Abdichtvorrichtung nach Anspruch 1, dadurch gekennzeichnet, daß die axiale Ausdehnung des Ausweichraumes (7) gleich oder kleiner als die Hälfte der in gleicher Richtung sich erstreckenden Abmessung des Dichtringes (5) ist.

3. Abdichtvorrichtung nach Anspruch 1 oder 2, dadurch gekennzeichnet, daß die im Querschnitt schräge Begrenzung (9) des Ausweichraumes (7) bei radial von dem Durchmesser des Dichtringes (5) abweichender Form von dem Dichtring (5) zu der von dem Gegenstück (1) abgewendeten Seite des Einstiches (6) ansteigt, so daß der größte Durchmesser des Ausweichraumes (7) an oder nahe bei der Rückwand (10) des Einstiches angeordnet ist.

4. Abdichtvorrichtung nach einem der Ansprüche 1 bis 3, dadurch gekennzeichnet, daß die Querschnittsbegrenzung des Einstiches (6) auf der dem Ausweichraum (7) radial gegenüberliegenden Seite etwa rechtwinklig, gegebenenfalls mit gerundeter Kante ausgebildet und/oder einem weiteren, sich radial und/oder axial erstreckenden Einstich (11) versehen ist.

5. Abdichtvorrichtung nach einem der Ansprüche 1 bis 4, dadurch gekennzeichnet, daß ein sich in radialer Richtung erstreckender Einstich (6) vorgesehen ist, bei welchem der Ausweichraum (7) axial und/oder radial von der Querschnittsform (M) des Dichtringes (5) abweicht.

6. Abdichtvorrichtung nach einem der Ansprüche 1 bis 5, dadurch gekennzeichnet, daß der Einstich (6) zwei einander entgegengesetzt angeordnete Ausweichräume (7) aufweist, die sich etwa spiegelbildlich zur Querschnittsmitte des Dichtringes (5) gegenüberliegen.

7. Abdichtvorrichtung nach einem der Ansprüche 1 bis 6, dadurch gekennzeichnet, daß der Übergang der schrägen Begrenzung (9) des Ausweichraumes (7) in die in Ausgangsstellung bereits an dem Dichtring (5) anliegende Begrenzung gerundet oder spitzwinklig ausgebildet ist.

**Claims**

1. Sealing device with a sealing ring (5) which is constructed as a profile or O-ring and is acted upon axially, said sealing ring (5) being located between two parts which are to be sealed and which can be screwed up by means of screw threads, at least one (1) of said parts having a circular cross section at least in the sealing area, whilst the sealing ring (5) is held in a recess (6) in a flange (8) of the other part (2, 3), said recess being provided in the threaded region and partially surrounding it, the end face of one part (1) abutting on the sealing ring (5) whilst the recess (6) surrounding the sealing ring (5) has at least one annular deflection space (7) for the sealing ring (5) deformed by the contact pressure, this deflection space (7) being formed by a radially outward expansion of the recess, its axial dimension being less than or equal to about 3/4 of the dimension of the sealing ring (5) extending in the same direction, characterised in that the expansion which forms the deflection space (7) is bounded by at least one surface (9) having an undercut in cross section or some similar recess, and the deflection space (7) expands preferably conically away from the sealing ring (5) so that the inner area of one part (1) serving as a sealing surface may have a rectangular or chamfered edge.

2. Sealing device as claimed in claim 1, characterised in that the axial dimension of the deflection space (7) is less than or equal to half the dimension of the sealing ring (5) extending in the same direction.

3. Sealing device as claimed in claim 1 or 2, characterised in that the boundary (9) of the deflection space (7) which is sloping in cross section ascends from the sealing ring (5) to the side of the recess (6) facing away from the mating part (1), when its radial shape deviates from the diameter of the sealing ring (5), with the result that the largest diameter of the deflection space (7) is located at or near the rear wall (10) of the recess.

4. Sealing device as claimed in one of claims 1 to 3, characterised in that the cross-sectional boundary of the recess (6) on the side radially opposite the deflection space (7) is substantially rectangular, possibly with a rounded edge and/or is provided with another radially and/or axially extending recess (11).

5. Sealing device as claimed in one of claims 1 to 4, characterised in that a radially extending recess (6) is provided wherein the deflection space (7) deviates axially and/or radially from the cross-sectional shape (M) of the sealing ring (5).

6. Sealing device as claimed in one of claims 1 to 5, characterised in that the recess (6) has two opposing deflection spaces (7) which lie opposite each other substantially in mirror symmetry with respect to the cross-sectional centre of the sealing ring (5).

7. Sealing device as claimed in one of claims 1 to 6, characterised in that the transition of the sloping boundary (9) of the deflection space (7) into the boundary already abutting on the sealing ring (5) in the starting position is rounded or pointed in construction.

**Revendications**

1. Dispositif d'étanchéité muni d'un anneau d'étanchéité (5) en forme de profilé ou d'anneau torique, subissant une action axiale, entre deux parties à rendre étanches pouvant se visser au moyen de filetages, dont au moins une (1) présente au moins dans la région d'étanchéité une section circulaire, l'anneau d'étanchéité (5) étant retenu dans une contre-dépouille (6) l'entourant partiellement, disposée dans la région du filetage et prévue dans un collet (8) de l'autre partie (2, 3), le côté frontal de l'une (1) des parties venant s'appliquer contre l'anneau d'étanchéité (5) et la contre-dépouille (6), qui entoure l'anneau d'étanchéité (5), présentant au moins un espacement d'affaissement annulaire (7), destiné à l'anneau d'étanchéité (5) déformé par la pression d'application, cet espacement d'affaissement (7) étant formé par un élargissement de la contre-dépouille en direction radiale vers l'extérieur et son extension axiale étant égale ou inférieure à environ 3/4 de la dimension de l'anneau d'étanchéité (5) s'étendant dans la même direction, caractérisé en ce que l'élargissement formant l'espacement d'affaissement (7) est limité par au moins une surface (9) ou un retrait similaire, formant en section une contre-dépouille, et l'espacement d'affaissement (7) s'élargit, de préférence coniquement, en s'éloignant de l'anneau d'étanchéité (5), de sorte que la région intérieure de l'une des parties (1), servant de surface d'étanchéité, peut présenter un bord à angle droit ou biseauté.

2. Dispositif d'étanchéité selon la revendication 1, caractérisé en ce que l'extension axiale de l'espacement d'affaissement (7) est égale ou inférieure à la moitié de la dimension de l'anneau d'étanchéité (5) qui s'étend dans la même direction.

3. Dispositif d'étanchéité selon l'une des revendications 1 ou 2, caractérisé en ce que la limitation (9) de l'espacement d'affaissement (7), oblique dans sa section, ayant une forme s'écartant radialement du diamètre de l'anneau d'étanchéité (5), s'élève de l'anneau d'étanchéité (5) vers le côté de la contre-dépouille (6), qui est opposé à la pièce complémentaire (1), de sorte que le plus grand diamètre de l'espacement d'affaissement (7) est disposé à la paroi postérieure (10) de la contre-dépouille ou près de cette paroi.

4. Dispositif d'étanchéité selon l'une des revendications 1 à 3, caractérisé en ce que la limitation de section de la contre-dépouille (6), du côté opposé radialement à l'espacement d'affaissement (7), présente une forme à peu près à angle droit, éventuellement à bord arrondi et/ou est munie d'une autre contre-dépouille (11) s'étendant radialement et/ou axialement.

5. Dispositif d'étanchéité selon l'une des revendications 1 à 4, caractérisé en ce qu'il est prévu une contre-dépouille (6) s'étendant en direction radiale, à l'endroit de laquelle l'espacement d'affaissement (7) s'écarte axialement et/ou radialement de la forme de section (M) de l'anneau d'étanchéité (5).

6. Dispositif d'étanchéité selon l'une des revendications 1 à 5, caractérisé en ce que la contre-dépouille (6) présente deux espacements d'affaissement (7) disposés de façon opposée l'un à l'autre, qui se font face à peu près symétriquement autour du centre de la section de l'anneau d'étanchéité (5).

7. Dispositif d'étanchéité selon l'une des revendications 1 à 6, caractérisé en ce que la transition de la limitation oblique (9) de l'espacement d'affaissement (7) à la limitation qui s'applique déjà à l'anneau d'étanchéité (5) dans la position initiale est de forme arrondie ou à angle aigu.

**0 061 752**

Fig. 1

Fig. 2

1

Fig. 3

Fig. 4

Fig. 5

Fig. 6